# EUROPÄISCHE PATENTSCHRIFT

(11) **EP 2 626 666 B1**
(45) Veröffentlichungstag und Bekanntmachung des Hinweises auf die Patenterteilung: **15.03.2017**
(21) Anmeldenummer: 13152619.6
(22) Anmeldetag: 25.01.2013
(51) Int. Cl.: G06K 9/00, G01B 21/00, G01B 11/00, B62D 15/02

(54) **Parkassistenzverfahren zur Ermittlung einer Parklücke**
Parking assisting method for determining a parking space
Procédé d'assistance au stationnement pour détecter une place de stationnement

(30) Priorität: 09.02.2012 DE 102012201891
(43) Veröffentlichungstag der Anmeldung: 14.08.2013
(73) Patentinhaber: ROBERT BOSCH GMBH, 70442 Stuttgart (DE)
(72) Erfinder: Niemz, Volker, 71277 Rutesheim (DE)

(56) Entgegenhaltungen:
- DE-A1- 19 730 414
- DE-A1-102009 058 034
- JP-A- 2010 012 838

## Beschreibung

### Stand der Technik

Die Erfindung betrifft ein Parkassistenzverfahren zur Ermittlung einer Parklücke.

Jährlich steigt die Verkehrsdichte auf den weltweiten Straßennetzen stark an. Besonders in Ballungszentren resultiert daraus eine hohe Belastung für den Verkehrsteilnehmer. Ein sicheres Agieren mit dem Fahrzeug wird für Fahrzeugführer immer schwieriger.

Der zur Verfügung stehende Parkraum wird enger und die Suche nach einem geeigneten und zu den Fahrzeugabmessungen passenden Parkplatz stellt eine Herausforderung für den Autofahrer dar. Dabei wird dem Fahrer abverlangt, trotz hohen Verkehrsaufkommens schnell zu entscheiden, ob und wie sein Fahrzeug in die gefundene Parklücke passt.

Diese komplexe Aufgabe soll von Einparkassistenten übernommen werden, wodurch das alltägliche Fahrmanöver des Einparkens stark vereinfacht werden kann. Damit eine potentielle Parklücke präzise klassifiziert werden kann, ist eine geometrische und topographische Beschreibung der Parklücke notwendig.

Am weitesten verbreitet sind derzeit Lösungen, bei welchen Objekte verschiedenster Formen unterschieden werden und deren Abstände zueinander und zum Ego-Fahrzeug aus Tiefeninformationen ermittelt werden. Aufgrund der Reflexionseigenschaften von Ultraschall stellt vor allem der Winter eine hohe Herausforderung für die Parklückendetektion dar. Schnee besitzt eine stark schallabsorbierende Eigenschaft, woraufhin Parklücken nur sehr schlecht oder gar nicht detektiert werden können. Beim Längsparken liegt dies z. B. zum einen an der schlechten Detektierbarkeit lateraler Bordsteine, wenn diese mit Schnee bedeckt sind, und zum anderen an der falschen geometrischen Abbildung angrenzender Fahrzeuge aufgrund schneebedeckter Karosserien.

Neben den halbautomatisierten Einparksystemen auf Ultraschallbasis halten auch immer mehr anzeigende Videosysteme Einzug in den Markt. Dabei werden Kameras zur Nahfeldüberwachung an verschiedenen Fahrzeugstellen, beispielsweise in den Seitenspiegeln, an der Fahrzeugfront, wie etwa hinter der Windschutzscheibe, am Fahrzeugheck oder im Radkasten verbaut und der Fahrer kann aus verschiedenen Kamerasichten wählen oder sich ein zusammengerechnetes Bild beispielsweise aus einer Vogelperspektive anzeigen lassen.
Die DE 10 2008 062 708 A1 beschreibt ein Verfahren zur Parklückenvermessung, welches eine Erfassung der Parklückendimension ermöglicht, wobei neben scannenden Lasersystemen auch bildverarbeitende Sensoren eingesetzt werden.
Die DE 10 2009 058 034 A1 zeigt ein Kollisionsvermeidungssystem, bei dem Videosysteme, Ultraschall-, Radar- und/oder Lasersensoren miteinander kombiniert werden.
Die DE 10 2005 027 642 A1 zeigt ein Verfahren zur Unterstützung eines Einparkvorgangs eines Fahrzeugs in eine seitlich zu dem zu parkenden Fahrzeug angeordnete Parklücke, wobei die Parklücke mittels Ultraschallsensoren während eines Vorbeifahrens des Fahrzeugs an der Parklücke erfasst wird, und wobei mittels Videosensoren und entsprechender softwarebasierter Bildverarbeitung eine Orientierung einer dem zu parkenden Fahrzeug abgewandten seitlichen Parklückenbegrenzung der Parklücke bestimmt wird. Die Technik ermöglicht eine Verringerung des Einflusses von Störquellen, wie z. B. eine Verdeckung der seitlichen Parklückenbegrenzung durch Laub oder Verschmutzung.
JP 2010 012838 A offenbart ein Parkassistenzverfahren, bei welchem ein Bildsensor eine Umgebung eines Fahrzeugs erfasst. Es ist eine Aufgabe der Erfindung, ein Verfahren anzugeben, welches Alternativen zu den bekannten Verfahren bietet. Insbesondere soll ein Parkassistenzverfahren angegeben werden, das eine Detektion von Parklücken im Winter erleichtert.

### Offenbarung der Erfindung

Die Aufgabe wird gelöst durch ein Parkassistenzverfahren mit den Merkmalen des Anspruchs 1. Weitere Vorteile ergeben sich aus den Merkmalen der abhängigen Ansprüche.

Erfindungsgemäß ist ein Parkassistenzverfahren vorgesehen, bei welchem ein Bildsensor eine Umgebung eines Fahrzeugs erfasst, auf den erfassten Bildern Fahrzeugschattenspuren erkannt werden und die erkannten Fahrzeugschattenspuren zur Detektion einer Parklücke verwendet werden.

In vorteilhafter Weise ermöglichen Fahrzeugschattenspuren eine Ermittlung der Parklücke auf Basis einer vormaligen Position eines anderen Fahrzeugs. Die ermittelte Parklücke wurde zuvor bereits von einem anderen Fahrzeug genutzt und ist aktuell frei.

Damit wird ein Merkmal einer Parklücke angegeben, welches zusätzlich zu bestehenden Systemen zur Detektion der Parklücke verwendet werden kann. Das Verfahren kann daher in Verfahren integriert werden, die eine Erfassung von Parklückenbegrenzungselementen wie weiteren Fahrzeugen und/oder Bordsteinen und/oder Hindernissen vorsehen, es kann aber auch eigenständig ablaufen, beispielsweise sobald diese Systeme versagen. Besonders vorteilhaft ist, dass das System dann eingesetzt wird, wenn das Ultraschallsystem im Winter keine zuverlässige Eckenlokalisierung bietet und ein optisches System im Winter aufgrund fehlender Kontraste wegen schneebedeckter Fahrzeugoberflächen keine zuverlässige Extraktion von Fahrzeugsilhouetten ermöglicht.

Nach einer bevorzugten Ausführungsform der Erfindung umfassen die Fahrzeugschattenspuren schneefreie Flächen. Die Technik zur Extraktion der Fahrzeugschattenspur, welche für eine Winterszene optimiert ist, lässt sich aber auch bei verschiedenen Niederschlagsszenen, wie etwa Regenszenen einsetzen und bietet somit auch außerhalb der Winterzeit eine Alternative oder eine Ergänzung für existierende Techniken. In einer weiteren Ausführungsform umfassen die erkannten Fahrzeugschattenspuren daher auch trockene Flächen. Den Situationen nach einem Niederschlag in Form von Schnee, Hagel, Regen oder Graupeln, ist gemein, dass hiernach die von dem Fahrzeug überdeckte Parklücke durch eine Beschaffenheit gekennzeichnet ist, die verschieden von der sie umgebende Fläche ist. Der Niederschlag ergeht auf das Fahrzeug und gelangt aufgrund der Abschattung durch das Fahrzeug nicht unter das Fahrzeug. Die verschiedene Beschaffenheit ist auf den Bilddaten des Bildsensors als ein Farbkontrast erkennbar.

In einer Winterszene hinterlässt das verschneite Fahrzeug eine Spur, die als eine Aussparung einer verschneiten Fläche bezeichnet werden kann. Parkt ein verschneites Fahrzeug aus, so hinterlässt es die Fahrzeugschattenspur als einen dunklen Fleck auf dem Untergrund, welcher aufgrund der Fahrzeugabschattung nicht mit Schnee in Berührung kam. Demzufolge ist in der Winterszene ein Farbgradient zwischen der Schneefläche und der Fahrzeugschattenspur detektierbar, woraus die Fahrzeugschattenspur bestimmt werden kann. In der Regenszene ist ein Farbgradient der Art nach auch vorhanden, aber weniger stark ausgeprägt und entspricht der charakteristischen Farbänderung durch einen Feuchtigkeitsfilm auf trockenem Material. Für typische Materialien wie etwa Asphalt oder Pflastersteine kann die Empfindlichkeit einer Erkennungseinrichtung zur Ermittlung der Fahrzeugschattenspuren entsprechend auf die Detektion der durch Aufnahme von Nässe zu erwartenden Farbgradienten optimiert sein.

Nach einer Ausführungsform der Erfindung werden Abmessungen der Parklücke, wie beispielsweise eine Größe der Parklücke, anhand der Fahrzeugschattenspur ermittelt. Die Ermittlung der Größe kann im einfachsten Fall durch Zählen von Pixeln erfolgen. In einer Ausführungsform der Erfindung werden Umrisse der Fahrzeugschattenspur, d. h. ihre Kontur ermittelt. Für die Detektion der Umrisse werden beispielsweise Bildinformationen wie optische Kontraste verwendet. Die durch die Lage des Fahrzeugs in Bezug auf die Fahrzeugschattenspur hervorgerufenen optischen Verzerrungen werden bevorzugt bereits vom Bilderkennungsverfahren korrigiert. Bei einem Weitwinkelbildsensorsystem, wie etwa einer Surround-View-Kamera, welche in einem Seitenspiegel des Fahrzeugs eingebaut ist, können dies beispielsweise kissenförmig verzerrte rechteckige Flächen sein.

Bevorzugt werden Kenntnisse darüber verwendet, dass die Fahrzeugschattenspuren einer Projektion eines Fahrzeugumrisses des vorherig parkenden Fahrzeugs entsprechen. Daher wird aus den Bilddaten bevorzugt ein umgebender Kasten der Fahrzeugschattenspur ermittelt werden, der auch als "Bounding Box" bezeichnet sein kann, aus welchem insbesondere die Größe der Parklücke ermittelt werden kann.

Durch Ermittlung von Abmessungen der Parklücke kann insbesondere entschieden werden, ob die Parklücke für das Egofahrzeug ausreichend groß ist oder nicht. Nach einer Ausführungsform der Erfindung wird das Egofahrzeug auf die erkannte Fahrzeugschattenspur navigiert. Eine Navigation auf die Parklücke wird bevorzugt nur dann vorgeschlagen, wenn eine ausreichende Größe der Parklücke detektiert wurde. Somit nimmt das System dem Fahrer die Entscheidung ab, ob und wie sein Fahrzeug in die gefundene Parklücke passt.

Dabei können dem Fahrer des Fahrzeugs oder einem System zur Steuerung des Fahrzeugs Lenkhinweise übermittelt werden, um ein halbautomatisches oder vollautomatisches Fahren des Fahrzeugs auf die Fahrzeugschattenspuren, d. h. insbesondere auf die ermittelte Parklücke, zu unterstützen. Hierzu weist das Fahrzeug zweckmäßig Komponenten auf, welche beispielsweise über Odometrie und/oder über ein GPS-Navigationssystem Informationen über die aktuelle Position des Fahrzeugs und eine von der Ermittlungseinrichtung ermittelte Zielposition zur Verfügung stellen. Aus der Differenz der Positionen kann eine weitere Komponente einen Überführungsweg berechnen, d. h. eine Fahrzeugtrajektorie von der aktuellen Position auf die ermittelte Zielparkposition, welche auf der Fahrzeugschattenspur liegt.

Bevorzugt wird eine bezüglich der detektierten Fahrzeugschattenspur mittige Parkposition angestrebt, weil davon ausgegangen werden kann, dass das zuvor geparkte Fahrzeug bereits ein sicheres Ein- und Aussteigen des Fahrers und der weiteren Insassen des Fahrzeugs erlaubt hat, was eine gefahrlose Parkposition auch für das Fahrzeug wahrscheinlich erscheinen lässt. Hierbei ist es besonders praktisch, wenn der Fahrer eine Zielparkposition aus einem Menü auswählen kann, in welchem eine bezüglich der erkannten Fahrzeugschattenspur mittige Position auswählbar ist, wobei diese auch eine von mehreren Optionen sein kann, welche durch weitere Einparkassistenzsysteme berechnet und zur Verfügung gestellt werden. Insbesondere eine Berücksichtigung des Verlaufs von Bordsteinkanten kann dazu führen, dass mehrere Parkpositionen dem Fahrer zumindest angeboten werden, wobei dieser auswählen kann, welche Parkposition die Zielparkposition sein soll.

In einer Ausführungsform der Erfindung wird das Verfahren in Kombination mit einem auf Ultraschalltechnik basierenden Parkassistenzverfahren verwendet. Mithilfe der Ultraschalltechnik und/oder mithilfe des Bildsensorsystems können auch weitere Gegenstände erfasst und im Rahmen eines Fahrerassistenzsystems zur Kollisionsvermeidung berücksichtigt werden, so dass der Überführungsweg von der aktuellen Position des Fahrzeugs auf die Parkposition ein kollisionsfreier Weg ist. Für den Fall, dass sich auf der ermittelten Parkposition ein detektierter Gegenstand befindet, kann ein Signal ausgegeben werden, beispielsweise ein akustisches, ein visuelles oder ein haptisches Signal. Somit kann der Fahrer des Fahrzeugs benachrichtigt werden, dass eine Navigation auf die optimale Parkposition nicht möglich ist. In dem Fall erfolgt keine halbautomatische oder automatische Navigation des Fahrzeugs auf die besetzte Parkposition. Erkannte Hindernisse können auch dazu führen, dass eine in der Fahrzeugschattenspur mittige Position unvorteilhaft ist und nicht angestrebt wird.

Bevorzugt sind die angegebenen Verfahren als Parklückenerkennung im Rahmen eines Fahrerassistenzsystems vorgesehen, welches von einem Insassen aktivierbar ist, insbesondere von dem Fahrer selbst. Die Parklückenerkennung auf Basis eines der vorher beschriebenen Verfahren kann auch standardmäßig bei Aktivierung eines Einparkassistenten durch einen Insassen, etwa den Fahrer, mitgestartet werden. Sie kann aber auch als Teil eines Fahrerassistenzsystems ausgebildet sein, welches sich automatisch dann aktiviert, wenn festgestellt wurde, dass eine Winterszene oder eine Regenszene vorliegt. Die automatische Aktivierung kann auf der Auswertung von Daten einer Wetterbedingungserfassungseinrichtung beruhen.

In einer Ausführungsform der Erfindung wird die erkannte Fahrzeugschattenspur und ggf. auch der ermittelte umgebende Kasten der Fahrzeugschattenspur auf einem Ausgabegerät, wie einem Display, dem Fahrer angezeigt. Die Anzeige kann dabei nach dem Prinzip einer *augmented reality* erfolgen, in welcher das von dem Bildsensorsystem empfangene Bild durch die durch eine Software berechneten Gegenstände insbesondere farblich hervorgehoben überlagert dargestellt ist. Der Fahrer kann so erkennen, ob die ermittelte Fahrzeugschattenspur auf korrekten Daten basiert. Das Display kann beispielsweise als ein Head-up-Display oder als ein Head-down-Display ausgebildet sein und/oder bevorzugt eine Touch-screen-Fläche umfassen, welche der Fahrer aus seiner Position gefahrlos und leicht bedienen kann. Der Fahrer kann auf der Touchscreenfläche beispielsweise im Rahmen einer Abfrage bestätigen, dass die Fahrzeugschattenspur und/oder der ermittelte umgebende Kasten der Fahrzeugschattenspur korrekt erkannt wurden und/oder dass eine vorgeschlagene optimale Parkposition korrekt berechnet ist. Fall nötig, kann der Fahrer eine Korrektur veranlassen, beispielsweise eine erneute Detektion bzw. Berechnung der Fahrzeugschattenspur bzw. der Parklücke.

Erfindungsgemäß wird weiterhin ein Computerprogramm vorgeschlagen, gemäß dem eines der hierin beschriebenen Verfahren durchgeführt wird, wenn das Computerprogramm auf einer programmierbaren Computereinrichtung ausgeführt wird. Bei dem Computerprogramm kann es sich beispielsweise um ein Modul zur Implementierung eines Fahrerassistenzsystems oder eines Subsystems hiervon in einem Fahrzeug handeln oder um eine Applikation für Fahrerassistenzfunktionen, die auf einem Smartphone ausführbar ist. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-ROM, DVD oder einem USB-Stick.

Zusätzlich oder alternativ kann das Computerprogramm auf einer Computereinrichtung wie etwa einem Server zum Herunterladen bereitgestellt werden, z. B. über ein Datennetzwerk wie etwa das Internet oder eine Kommunikationsverbindung wie etwa eine Telefonleitung oder eine drahtlose Verbindung.

Ein nicht beanspruchtes Fahrerassistenzsystem umfasst ein Bildsensorsystem zur Erfassung einer Umgebung des Fahrzeugs, eine Komponente zur Erkennung einer Fahrzeugschattenspur aus den erfassten Umgebungsbildern und eine Komponente zur Ermittlung einer Parklücke aus der Fahrzeugschattenspur. Bevorzugt weist das Fahrerassistenzsystem eine Komponente zur Ermittlung einer aktuellen Position des Fahrzeugs sowie eine Komponente zur Ausgabe von Lenkhinweisen auf einer Anzeigeeinheit an den Fahrer auf, so dass dieser dem vorgeschlagenen Weg durch Steuern, Beschleunigen und Bremsen des Fahrzeugs folgen kann und/oder eine Komponente zur Ansteuerung eines Steuerungssystems des Fahrzeugs, um ein halbautomatisches oder ein vollautomatisches Fahren des Fahrzeugs von der aktuellen Position des Fahrzeugs in die Parklücke auf die Fahrzeugschattenspur zu unterstützen oder auszuführen.

Weitere Ausführungsbeispiele und Vorteile der Erfindung werden nachfolgend in Bezug auf die Zeichnungen beschrieben.

### Kurze Beschreibung der Zeichnungen

Es zeigen
- Fig. 1: eine schematische Darstellung funktionaler Komponenten eines Fahrerassistenzsystems,
- Fig. 2: eine schematische Draufsicht auf eine Winterszene mit einer Parklücke und
- Fig. 3: ein Bild einer Kamera von einer Winterszene.

### Ausführungsformen der Erfindung

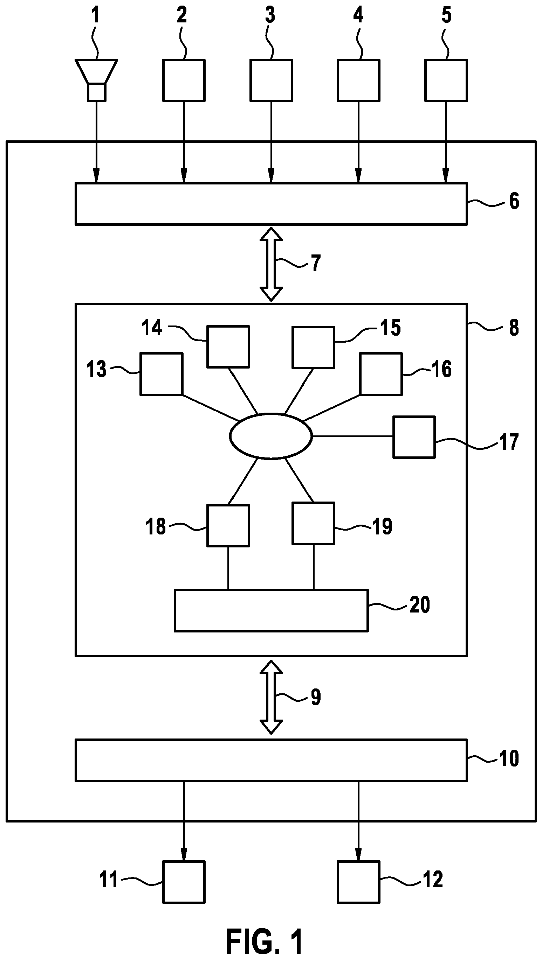

Fig. 1 zeigt eine schematische Darstellung funktionaler Komponenten eines Fahrerassistenzsystems. Das Fahrerassistenzsystem ist dazu ausgebildet, eine Fahrzeugschattenspur zu erkennen und anhand der Fahrzeugschattenspur eine Parklücke zu detektieren. Das Fahrerassistenzsystem umfasst hierzu zumindest einen Bildsensor 1 eines Bildsensorsystems, welcher als eine Monokular- oder Stereovideokamera ausgebildet sein kann. Bevorzugt umfasst das Bildsensorsystem eine Seitenkamera, insbesondere eine im Seitenspiegel des Fahrzeugs verbaute Surround-View-Kamera oder beispielsweise eine seitwärts aus der Fahrzeugschnauze heraus gerichtete Side-View-Assistant-Kamera. Es kann aber auch weitere zur Aufnahme von Parklücken geeignete Kameras, beispielsweise eine hinter der Windschutzscheibe angeordnete Multifunktionskamera umfassen.

Das Fahrerassistenzsystem umfasst gegebenenfalls weitere Sensoren, beispielsweise ein Ultraschallsensorsystem 2, einen GPS-Sensor 3, eine Wetterbedingungserfassungseinrichtung 4 und eine Eigendatensensorik 5, deren Signale, ebenso wie die Signale des Bildsensorsystems 1, in einer Eingangsschaltung 6 empfangen werden. Die Eingangsschaltung 6 ist mit einem Bussystem 7 zum Datenaustausch mit einer Datenverarbeitungseinrichtung 8 verbunden. Die Datenverarbeitungseinrichtung 8 ist mit einem weiteren 9 oder demselben 7 Bussystem mit einer Ausgangsschaltung 10 verbunden, an Ausgabevorrichtungen und/oder Steuervorrichtungen angeschlossen ist. Die Ausgabevorrichtungen umfassen insbesondere optische Vorrichtungen 11, beispielsweise Anzeigevorrichtungen auf einem Head-up-Display und/oder einem Head-down-Display, welche sich für die Übermittlung von Lenkhinweisen an den Fahrer des Fahrzeugs eignen. Die Steuervorrichtungen 12 umfassen insbesondere Vorrichtungen, die die Überführung des Fahrzeugs von einer aktuellen Position in die Parklücke ermöglichen, d. h. insbesondere ein Lenksystem, ein Antriebs- und ein Bremssystem des Fahrzeugs.

Die Datenverarbeitungseinrichtung 8 umfasst erfindungsgemäß eine Komponente 13 zur Erkennung einer Fahrzeugschattenspur, in welchem insbesondere die Daten des Bildsensors 1 weiterverarbeitet werden. Die Datenverarbeitungseinrichtung 8 kann weiterhin eine Komponente 14 zur Erkennung von Objekten auf Bildern des Bildsensorsystems aufweisen, die weitere Merkmale zur Bestimmung der Parklücke erkennt, beispielsweise Bordsteine oder angrenzende Fahrzeuge. Die Datenverarbeitungseinrichtung 8 kann weiterhin ein Ultraschallerkennungsmodul 15 aufweisen, in welchem insbesondere die Daten des Ultraschallsensorsystems 2 verarbeitet werden. Die Datenverarbeitungseinrichtung 8 kann außerdem ein Szeneerkennungsmodul 16 aufweisen, welches insbesondere Daten der Wetterbedingungserfassungseinrichtung 4, beispielsweise die Höhe der Außentemperatur und/oder Informationen aus dem Internet über das umgebende Wetter, weiterverarbeitet.

Der Bildsensor 1 empfängt ein Bild einer Fahrzeugumgebung, beispielsweise nachdem ein Insasse, etwa der Fahrer des Fahrzeugs, eine Fahrerassistenz zum Einparkvorgang aktiviert hat. Das empfangene Bild wird der Komponente 13 zur Erkennung einer Fahrzeugschattenspur übermittelt, welche die Fahrzeugschattenspur erkennt. Aus der erkannten Fahrzeugschattenspur ermittelt ein Parklückenerkennungsmodul 17, ob sich die detektierte Fahrzeugschattenspur als Parklücke für das Egofahrzeug eignet. In dem Fall, wenn sich die Fahrzeugschattenspur als Parklücke für das Egofahrzeug eignet, berechnet das Parklückenerkennungsmodul 17 eine Parkposition auf der Fahrzeugschattenspur, insbesondere mittig derselben. Ausgehend von einer aus Daten der Eigendatensensorik 5 und/oder aus Daten des GPS-Sensors 3 ermittelbaren aktuellen Position des Fahrzeugs und aus den Daten des Parklückenerkennungsmoduls 17 ermittelt ein Überführungsmodul 18 einen Überführungsweg von der derzeitigen Lage in die optimale Parkposition.

Bei der Berechnung des Überführungswegs können Gegenstände berücksichtigt werden, welche durch ein Kollisionsüberwachungsmodul 19 aus den Daten des Bildsensors 1 und/oder des Ultraschallsensorsystems 2 detektiert werden. Das Überführungsmodul 18 kann ein Warnsignal anweisen, sofern eine Überführung in die optimale Parkposition des Fahrzeugs ohne Kollision möglich ist.

Die Überführung des Fahrzeugs von der derzeitigen Lage in die optimale Parkposition erfolgt durch ein Ansteuerungsmodul 20, welches über die Ausgangsschaltung 10 Lenkhinweise entweder auf einem Head-up-Display oder einem Head-down-Display des Fahrzeugs einblenden lässt oder an die Steuervorrichtungen 12 übergibt, welche eine automatisierte oder semi-automatisierte Bewegung des Fahrzeugs ausführen können. Das Ansteuerungsmodul 20 kann auch von dem Kollisionsüberwachungsmodul 19 ausgehend aktiv werden.

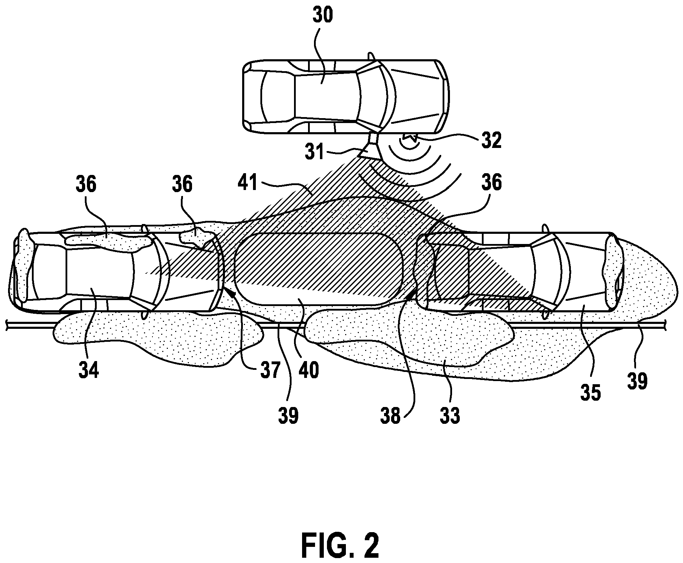

Fig. 2 zeigt ein Bild einer Winterszene in Draufsicht. Dargestellt ist das Egofahrzeug 30, welches eine in einem Seitenspiegel verbaute Surround-View-Kamera (SVS-Kamera) 31 aufweist. Das Egofahrzeug 30 weist zudem ein seitliches Ultraschallsensorsystem 32 auf, welches Abstände zum Fahrzeug detektieren kann. Das Egofahrzeug 30 befindet sich neben einer Parklücke, die durch eine weiße Aussparung 40 in einem schneebedeckten Bereich 33 erkennbar ist. Die Parklücke 40 liegt in einem durch eine schraffierte Fläche angedeuteten Erfassungsbereich 41 der Kamera 31. Die Parklücke 40 befindet sich zwischen zwei Fahrzeugen, nämlich einem hinter der Parklücke 40 parkenden Fahrzeug 34 und einem vor der Parklücke 40 parkenden Fahrzeug 35. Die beiden Fahrzeuge 34, 35 sind ebenfalls durch Schnee bedeckt, was in Figur 2 durch auf den Fahrzeugen 34, 35 angedeutete Schneeflächen 36 dargestellt ist.

Die Schneebedeckung 36 der Fahrzeuge und der Bordsteine 39 macht es für das optische System und für das Ultraschallsystem schwierig, die Kanten der parkenden Fahrzeuge 34, 35, insbesondere die Vorderfront 37 des hinter der Parklücke 40 parkenden Fahrzeugs 34 und das Heck 38 des vor der Parklücke 40 parkenden Fahrzeugs 35 zu detektieren. Ausgehend von dem durch die Kamera 31 empfangenen Bildmaterial wird, wie beispielsweise in Bezug auf Fig. 1 beschrieben, das Vorhandensein der Parklücke 40 detektiert und die Größe der Parklücke 40 berechnet. Die gewonnene Information wird dazu verwendet, zu entscheiden, ob die Parklücke 40 für die Aufnahme des Egofahrzeugs 30 geeignet ist. Die mit dem erfindungsgemäßen Verfahren gewonnenen Informationen über die Parklücke 40 können dabei vorteilhaft mit den bereits bekannten Verfahren zur Bestimmung von Parklücken, welche beispielsweise das Ultraschallsensorsystem 2 involvieren, ergänzt werden.

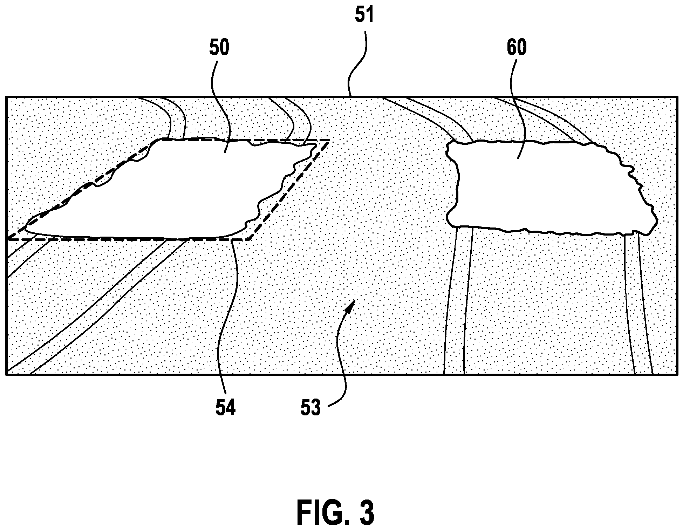

Fig. 3 zeigt ein Bild 51 zweier Fahrzeugschattenspuren 50, 60, welche sich in einer Winterszene 53 befinden. Das Bild 51 kann beispielsweise durch eine Seitenkamera eines Fahrzeugs, aber auch durch geeignete andere Kameras eines Fahrzeugs aufgenommen worden sein. Aufgrund des starken Farbgradienten zwischen der weißen Schneedecke und einem dunklen Fahrbahnhintergrund bieten die Fahrzeugschattenspuren 50, 60 sehr verlässliche und sichere Informationen über die Größe der Parklücke.

Das Bild 51 wird erfindungsgemäß einer Erkennungseinrichtung 13 zugeführt. Auf dem Bild 51 wurde die linke Fahrzeugschattenspur 50 erkannt und hieraus ein umgebender Kasten 54, eine sogenannte "bounding box" ermittelt. Der umgebende Kasten 54 ist aufgrund der Perspektive ein trapezförmig und parallelogrammförmig verzerrtes Rechteck. Er ist ein Objekt, welches sich zur Darstellung der Parklücke nach dem Prinzip einer *augmented reality* eignet sowie zur Berechnung der Abmessungen der Parklücke.

## Patentansprüche

1. Parkassistenzverfahren, bei welchem ein Bildsensor (1, 31) eine Umgebung (41) eines Fahrzeugs (30) erfasst, **dadurch gekennzeichnet, dass** auf den erfassten Bildern (51) Fahrzeugschattenspuren (40, 50, 60) erkannt werden und die erkannten Fahrzeugschattenspuren (40, 50, 60) zur Ermittlung einer Parklücke verwendet werden, wobei das Fahrzeug (30) auf eine erkannte Fahrzeugschattenspur (40, 50, 60) navigiert wird.

2. Parkassistenzverfahren nach Anspruch 1, **dadurch gekennzeichnet, dass** die Fahrzeugschattenspuren (40, 50, 60) schneefreie und/oder trockene Flächen umfassen.

3. Parkassistenzverfahren nach einem der vorhergehenden Ansprüche, **dadurch gekennzeichnet, dass** anhand der Fahrzeugschattenspuren (40, 50, 60) Abmessungen der Parklücke ermittelt werden.

4. Parkassistenzverfahren nach einem der vorhergehenden Ansprüche, **dadurch gekennzeichnet, dass** ein umgebender Kasten (54) einer Fahrzeugschattenspur (40, 50, 60) ermittelt wird.

5. Parkassistenzverfahren nach einem der vorhergehenden Ansprüche, **dadurch gekennzeichnet, dass** das Verfahren in Kombination mit einem auf Ultraschalltechnik (2,32) basierenden Parkassistenzverfahren verwendet wird.

6. Parkassistenzverfahren nach einem der vorhergehenden Ansprüche, **dadurch gekennzeichnet, dass** das Verfahren ein von einem Insassen des Fahrzeugs aktivierbares Parkassistenzverfahren ist.

7. Parkassistenzverfahren nach einem der vorhergehenden Ansprüche, **dadurch gekennzeichnet, dass** der Bildsensor (1, 31) eine Seitenkamera, insbesondere eine Surround-View-Kamera, zur Aufnahme der Fahrzeugschattenspuren (40, 50, 60) umfasst.

8. Computerprogramm zur Durchführung eines der Verfahren nach einem der Ansprüche 1 bis 7, wobei das Computerprogramm auf einer programmierbaren Computereinrichtung ausgeführt wird.

## Claims

1. Parking assistance method in which an image sensor (1, 31) detects surroundings (41) of a vehicle (30), **characterized in that** traces of vehicle shadows (40, 50, 60) are detected on the captured images (51), and the detected traces of vehicle shadows (40, 50, 60) are used to determine a parking space, wherein the vehicle (30) is navigated onto a detected trace of a vehicle shadow (40, 50, 60).

2. Parking assistance method according to Claim 1, **characterized in that** the traces of vehicle shadows (40, 50, 60) comprise snow-free and/or dry areas.

3. Parking assistance method according to one of the preceding claims, **characterized in that** dimensions of the parking space are determined on the basis of the traces of vehicle shadows (40, 50, 60).

4. Parking assistance method according to one of the preceding claims, **characterized in that** a surrounding box (54) of a trace of a vehicle shadow (40, 50, 60) is determined.

5. Parking assistance method according to one of the preceding claims, **characterized in that** the method is used in combination with a parking assistance method which is based on ultrasound technology (2, 32).

6. Parking assistance method according to one of the preceding claims, **characterized in that** the method is a parking assistance method which can be activated by an occupant of the vehicle.

7. Parking assistance method according to one of the preceding claims, **characterized in that** the image sensor (1, 31) comprises a side-view camera, in particular a surround-view camera, for capturing the traces of the vehicle shadows (40, 50, 60).

8. Computer program for carrying out one of the methods according to one of Claims 1 to 7, wherein the computer program is executed on a programmable computer device.

## Revendications

1. Procédé d'assistance au stationnement, dans lequel un capteur d'image (1, 31) détecte un environnement (41) d'un véhicule (30), **caractérisé en ce que** des traces d'ombres (40, 50, 60) de véhicules sont détectées et **en ce que** les traces d'ombres (40, 50, 60) de véhicules sont utilisées pour déterminer un emplacement de stationnement, dans lequel le véhicule (30) est dirigé vers une trace d'ombre (40, 50, 60) détectée du véhicule.

2. Procédé d'assistance au stationnement selon la revendication 1, **caractérisé en ce que** les traces d'ombres (40, 50, 60) de véhicules comprennent des surfaces dépourvues de neige et/ou sèches.

3. Procédé d'assistance au stationnement selon l'une des revendications précédentes, **caractérisé en ce que** des dimensions des emplacements de stationnement sont déterminées sur la base des traces d'ombres (40, 50, 60) de véhicules.

4. Procédé d'assistance au stationnement selon l'une des revendications précédentes, **caractérisé en ce qu'**un encadrement périphérique (5) d'une trace d'ombre (40, 50, 60) du véhicule est déterminé.

5. Procédé d'assistance au stationnement selon l'une des revendications précédentes, **caractérisé en ce que** le procédé est utilisé en association avec un procédé d'assistance au stationnement basé sur une technique à ultrasons (2, 32).

6. Procédé d'assistance au stationnement selon l'une des revendications précédentes, **caractérisé en ce que** le procédé est un procédé d'assistance au stationnement pouvant être activé par un passager du véhicule.

7. Procédé d'assistance au stationnement selon l'une des revendications précédentes, **caractérisé en ce que** le capteur d'image (1, 31) comprend une caméra latérale, notamment une caméra à vue circonférentielle, destinée à acquérir les traces d'ombres (40, 50, 60) de véhicules.

8. Programme informatique destiné à mettre en oeuvre l'un des procédés selon l'une quelconque des revendications 1 à 7, dans lequel le programme informatique est exécuté sur un dispositif informatique programmable.
